(19) Europäisches Patentamt
European Patent Office
Office européen des brevets

(11) **EP 3 312 846 A1**

(12) **EUROPEAN PATENT APPLICATION**
published in accordance with Art. 153(4) EPC

(43) Date of publication:
**25.04.2018 Bulletin 2018/17**

(21) Application number: **16811727.3**

(22) Date of filing: **16.06.2016**

(51) Int Cl.:
**H01B 13/00** $^{(2006.01)}$  **C01B 25/14** $^{(2006.01)}$
**H01M 6/18** $^{(2006.01)}$  **H01M 10/0562** $^{(2010.01)}$

(86) International application number:
**PCT/JP2016/068009**

(87) International publication number:
**WO 2016/204253 (22.12.2016 Gazette 2016/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.06.2015 JP 2015122371**

(71) Applicant: **Idemitsu Kosan Co., Ltd
Tokyo 100-8321 (JP)**

(72) Inventors:
• **SATO, Atsushi**
  **Sodegaura-shi**
  **Chiba 2990-293 (JP)**
• **SENGA, Minoru**
  **Sodegaura-shi**
  **Chiba 299-0293 (JP)**
• **AIDA, Masao**
  **Sodegaura-shi**
  **Chiba 299-0293 (JP)**

(74) Representative: **Hoffmann Eitle
Patent- und Rechtsanwälte PartmbB
Arabellastraße 30
81925 München (DE)**

(54) **SOLID ELECTROLYTE PRODUCTION METHOD**

(57)    The invention provides a method for producing a solid electrolyte, which includes reacting two or more kinds of solid raw materials using a multi-axial kneading machine to give an amorphous solid electrolyte, and which can provide amorphous and crystalline solid electrolytes with excellent productivity and mass-productivity, as well as a method for producing a crystalline solid electrolyte including producing the amorphous solid electrolyte followed by heating the solid electrolyte.

[Fig. 1]

## Description

Technical Field

The present invention relates to a solid electrolyte production method.

Background Art

With rapid spread of information-related instruments, communication instruments and others such as personal computers, video cameras, cell phones and the like in recent years, development of batteries that are utilized as power sources for them is considered to be important. Heretofore, in batteries for such uses, an electrolytic solution containing a flammable organic solvent has been used, but development of batteries having a solid electrolyte layer in place of an electrolytic solution is being made, which are solid as a whole not using a flammable organic solvent inside the batteries, in which, therefore, a safety unit can be simplified and which can drive down manufacturing costs and are excellent in productivity.

As a method for producing a solid electrolyte for use in the solid electrolyte layer, there are known a method of mechanically milling raw materials using a planetary ball mill or the like, a method of melting raw materials at a high temperature and the like (for example, PTL 1). In addition, as a method excellent in industrial productivity and mass-productivity, a method of making raw materials kept in contact with each other in a state where a hydrocarbon-based organic solvent has been added thereto, or mechanically milling them has been proposed (for example, PTLs 2, 3). Further, PTL 4 discloses a solid electrolyte glass production apparatus equipped with a screw and having a compression part for compressing raw materials and a melting part for heating the compressed raw materials to be a molten body (for example, PTL 4).

Citation List

Patent Literature

PTL 1: JP 11-134937 A
PTL 2: JP 2009-110920 A
PTL 3: WO 2009/047977 A1
PTL 4: JP 2012-96973 A

Brief Description of Drawings

Fig. 1 is a plane view cut at the center of a rotary shaft of a multi-axial kneading machine for use in the present invention.

Fig. 2 is a plan view cut vertically to the rotary shaft in a part provided with paddles of the rotary shaft of the multi-axial kneading machine for use in the present invention.
Fig. 3 is an X-ray analysis spectrum of an amorphous solid electrolyte obtained in Example 1.
Fig. 4 is an X-ray analysis spectrum of an amorphous solid electrolyte obtained in Example 2.
Fig. 5 is an X-ray analysis spectrum of an amorphous solid electrolyte obtained in Example 3.
Fig. 6 is an X-ray analysis spectrum of an amorphous solid electrolyte obtained in Example 4.

Summary of Invention

Technical Problem

However, the mechanical milling method or the method of melting raw materials at a high temperature described in PTL 1 requires a special equipment, and therefore cannot be said to be suitable for productivity and mass-productivity. The method using a hydrocarbon-based organic solvent described in PTLs 2 and 3 uses an organic solvent and therefore requires a step of drying and recovering the solvent, and as the case may be, the process is often complicated.

The production apparatus described in PTL 4 requires a high temperature of 600°C or higher for making the compressed raw materials a molten body, for example, 800°C or so in the case of producing $Li_3PS_4$ (PTL 4, paragraph [0031]). Consequently, a driving part of screws in the production apparatus is, though made of high-chromium steel, exposed to the high pressure in the compression part and to the high temperature in the melting part, therefore resulting in reduction in the material strength. In addition, the apparatus needs a special heating equipment and needs a large energy consumption amount, that is, the apparatus could not be said to have excellent productivity and mass-productivity.

The present invention has been made in consideration of the situation as above, and its object is to provide a method for producing amorphous and crystalline solid electrolytes excellent in productivity and mass-productivity, as well as a multi-axial kneading machine.

Solution to Problem

The present inventors have assiduously studied for the purpose of solving the above-mentioned problems and, as a result, have found that the problems can be solved by the following invention.

[1] A method for producing a solid electrolyte, including reacting two or more kinds of solid raw materials using a multi-axial kneading machine to give an amorphous solid electrolyte.
[2] The method for producing a solid electrolyte according to the above [1], wherein the temperature at the reaction is not higher than the crystallization temperature of the amorphous solid electrolyte.

[3] The method for producing a solid electrolyte according to the above [1] or [2], wherein the reaction is carried out while cooling.

[4] The method for producing a solid electrolyte according to any one of the above [1] to [3], wherein the reaction is carried out in a solid state.

[5] The method for producing a solid electrolyte according to any one of the above [1] to [4], wherein the solid raw materials contain a lithium element, a phosphorus element and a sulfur element.

[6] The method for producing a solid electrolyte according to the above [5], wherein the solid raw materials contain at least one of a lithium compound and a lithium metal elementary substance, and at least one of a phosphorus compound and a phosphorus elementary substance.

[7] The method for producing a solid electrolyte according to the above [5] or [6], wherein the solid raw materials contain lithium sulfide and phosphorus sulfide.

[8] The method for producing a solid electrolyte according to any one of the above [5] to [7], wherein the solid raw materials further contain a halogen element.

[9] The method for producing a solid electrolyte according to the above [8], wherein the halogen element is at least one of bromine and iodine.

[10] The method for producing a solid electrolyte according to the above [8] or [9], wherein the solid raw materials contain at least one of lithium bromide and lithium iodide.

[11] A method for producing a crystalline solid electrolyte, including producing a solid electrolyte according to the solid electrolyte production method of any one of the above [1] to [10] followed by heating the solid electrolyte.

[12] A method for producing an inorganic material, including reacting two or more kinds of solid raw materials using a multi-axial kneading machine to give an amorphous inorganic material.

[13] A multi-axial kneading machine for use in production of an amorphous solid electrolyte, the production including reacting two or more kinds of solid raw materials.

[14] A method for producing a solid electrolyte, including reacting two or more kinds of solid materials containing lithium sulfide and phosphorus sulfide, using a multi-axial kneading machine, to give an amorphous solid electrolyte containing a lithium element, a phosphorus element and a sulfur element.

[15] A method for producing a solid electrolyte, including reacting two or more kinds of solid raw materials containing lithium sulfide, phosphorus sulfide, and at least one of lithium bromide and lithium iodide, using a multi-axial kneading machine, to give an amorphous solid electrolyte containing a lithium element, a phosphorus element, a sulfur element, and at least one of a bromine element and an iodine element.

[16] A method for producing a solid electrolyte including reacting two or more kinds of solid raw materials containing lithium sulfide and phosphorus sulfide, using a multi-axial kneading machine, to give an amorphous solid electrolyte containing a lithium element, a phosphorus element and a sulfur element, wherein the temperature at the reaction is not higher than the crystallization temperature of the amorphous solid electrolyte.

[17] A method for producing a solid electrolyte including reacting two or more kinds of solid raw materials containing lithium sulfide, phosphorus sulfide, and at least one of lithium bromide and lithium iodide, using a multi-axial kneading machine, to give an amorphous solid electrolyte containing a lithium element, a phosphorus element, a sulfur element, and at least one of a bromine element and an iodine element, wherein the temperature at the reaction is not higher than the crystallization temperature of the amorphous solid electrolyte.

[18] A method for producing a crystalline solid electrolyte, including reacting two or more kinds of solid raw materials containing lithium sulfide and phosphorus sulfide using a multi-axial kneading machine to give an amorphous solid electrolyte containing a lithium element, a phosphorus element and a sulfur element, followed by heating the amorphous solid electrolyte.

[19] A method for producing a crystalline solid electrolyte, including reacting two or more kinds of solid raw materials containing lithium sulfide, phosphorus sulfide and at least one of lithium bromide and lithium iodide, using a multi-axial kneading machine, to give an amorphous solid electrolyte containing a lithium element, a phosphorus element, a sulfur element and at least one of a bromine element and an iodine element, followed by heating the amorphous solid electrolyte.

[20] A method for producing a crystalline solid electrolyte, including reacting two or more kinds of solid raw materials containing lithium sulfide and phosphorus sulfide, using a multi-axial kneading machine, to give an amorphous solid electrolyte containing a lithium element, a phosphorus element and a sulfur element, followed by heating the amorphous solid electrolyte, wherein the temperature at the reaction is not higher than the crystallization temperature of the amorphous solid electrolyte.

[21] A method for producing a crystalline solid electrolyte including reacting two or more kinds of solid raw materials containing lithium sulfide, phosphorus sulfide, and at least one of lithium bromide and lithium iodide, using a multi-axial kneading machine, to give an amorphous solid electrolyte containing a lithium element, a phosphorus element, a sulfur element, and at least one of a bromine element and an iodine element, followed by heating the amorphous solid electrolyte, wherein the temperature at the reaction is not higher than the crystallization temperature of the amorphous solid electrolyte.

[22] A method for producing a solid electrolyte, including reacting two or more kinds of solid raw materials containing lithium sulfide and diphosphorus pentasulfide using a multi-axial kneading machine to give an amorphous solid electrolyte containing a lithium element, a phosphorus element and a sulfur element.

[23] A method for producing a solid electrolyte, including reacting two or more kinds of solid raw materials containing lithium sulfide, diphosphorus pentasulfide, and at least one of lithium bromide and lithium iodide, using a multi-axial kneading machine, to give an amorphous solid electrolyte containing a lithium element, a phosphorus element, a sulfur element, and at least one of a bromine element and an iodine element.

[24] A method for producing a solid electrolyte, including reacting two or more kinds of solid raw materials containing lithium sulfide and diphosphorus pentasulfide using a multi-axial kneading machine to give an amorphous solid electrolyte containing a lithium element, a phosphorus element and a sulfur element, wherein the temperature at the reaction is not higher than the crystallization temperature of the amorphous solid electrolyte.

[25] A method for producing a solid electrolyte, including reacting two or more kinds of solid raw materials containing lithium sulfide, diphosphorus pentasulfide, and at least one of lithium bromide and lithium iodide, using a multi-axial kneading machine, to give an amorphous solid electrolyte containing a lithium element, a phosphorus element, a sulfur element, and at least one of a bromine element and an iodine element, wherein the temperature at the reaction is not higher than the crystallization temperature of the amorphous solid electrolyte.

[26] A method for producing a crystalline solid electrolyte, including reacting two or more kinds of solid raw materials containing lithium sulfide and diphosphorus pentasulfide using a multi-axial kneading machine to give an amorphous solid electrolyte containing a lithium element, a phosphorus element and a sulfur element, followed by heating the amorphous solid electrolyte.

[27] A method for producing a crystalline solid electrolyte, including reacting two or more kinds of solid raw materials containing lithium sulfide, diphosphorus pentasulfide, and at least one of lithium bromide and lithium iodide, using a multi-axial kneading machine, to give an amorphous solid electrolyte containing a lithium element, a phosphorus element, a sulfur element, and at least one of a bromine element and an iodine element, followed by heating the amorphous solid electrolyte.

[28] A method for producing a crystalline solid electrolyte, including reacting two or more kinds of solid raw materials containing lithium sulfide and diphosphorus pentasulfide using a multi-axial kneading machine to give an amorphous solid electrolyte containing a lithium element, a phosphorus element and a sulfur element, followed by heating the solid electrolyte, wherein the temperature at the reaction is not higher than the crystallization temperature of the amorphous solid electrolyte.

[29] A method for producing a crystalline solid electrolyte, including reacting two or more kinds of solid raw materials containing lithium sulfide, diphosphorus pentasulfide, and at least one of lithium bromide and lithium iodide, using a multi-axial kneading machine, to give an amorphous solid electrolyte containing a lithium element, a phosphorus element, a sulfur element, and at least one of a bromine element and an iodine element, followed by heating the solid electrolyte, wherein the temperature at the reaction is not higher than the crystallization temperature of the amorphous solid electrolyte.

Advantageous Effects of Invention

According to the present invention, there can be provided amorphous and crystalline solid electrolytes with excellent productivity and mass-productivity.

Description of Embodiments

[Solid Electrolyte Production Method]

The solid electrolyte production method of the present invention includes reacting two or more kinds of solid raw materials using a multi-axial kneading machine to give an amorphous solid electrolyte.

In the present invention, the amorphous solid electrolyte is one whose X-ray diffraction pattern in X-ray diffractometry is a halo pattern substantially not having any other peak than the materials-derived peaks, irrespective of the presence or absence of solid electrolyte raw materials-derived peaks.

(Solid Raw Materials)

With no specific limitation, the solid raw materials for use in the production method of the present invention may be any ones that contain elements generally constituting amorphous solid electrolytes. For example, as the conductive species capable of expressing ion conductivity, at least one element selected from alkali metals such as lithium, sodium, potassium, rubidium, cesium, francium, etc., and alkaline earth metals such as beryllium, magnesium, calcium, strontium, barium, radium and the like is preferred, and in consideration of the ability of high ion conductivity and the ability to realize high output power of batteries, an alkali metal such as lithium, sodium, potassium, rubidium, cesium, francium, etc., and beryllium are more preferred, and lithium is especially preferred. Specifically, solid raw materials containing at least one element selected from alkali metals such as lithium, sodium, potassium, rubidium, cesium, francium, etc., and alkaline earth metals such as beryllium, magnesium, calcium, strontium, barium, radium and the like are preferred; solid raw materials containing at least one element selected from an alkali metal such as lithium, sodium, potassium, rubidium, cesium, francium, etc., and beryllium are more preferred; and solid raw materials containing a lithium element are especially preferred.

Any other element than the above-mentioned conductive species that may be in the solid raw materials may be adequately selected in accordance with the kinds of the elements constituting the desired solid electrolytes. For example, the amorphous solid electrolytes include, as mentioned below, oxide solid electrolytes, sulfide solid electrolytes, etc., and in consideration of the ability to realize high output power of batteries, sulfide solid electrolytes are preferred. In this case, in consideration of the above-mentioned conductive species and of the purpose of obtaining amorphous sulfide solid electrolytes, the solid raw materials are preferably those containing a lithium element, a phosphorus element and a sulfur element. Using such solid raw materials, solid electrolytes containing a lithium element, a phosphorus element and a sulfur element corresponding to the elements contained in the solid raw materials are obtained.

As the solid raw materials containing a lithium element, at least one of lithium compounds such as lithium sulfide ($Li_2S$), lithium oxide ($Li_2O$), lithium carbonate ($Li_2CO_3$), etc., and a lithium metal elementary substance is preferred; and as the lithium compound, lithium sulfide ($Li_2S$) is especially preferred.

Any lithium sulfide may be used with no specific limitation, but one having a high purity is preferred. Lithium sulfide may be produced, for example, according to the methods described in JP 7-330312 A, JP 9-283156 A, JP 2010-163356 A, and JP 2011-84438 A.

Specifically, lithium hydroxide and hydrogen sulfide are reacted in a hydrocarbon-based organic solvent at 70 to 300°C to give lithium hydrosulfide, and then the reaction liquid is processed for hydrogen sulfide removal to give lithium sulfide (JP 2010-163356 A). Alternatively, lithium hydroxide and hydrogen sulfide may be reacted in a water-based solvent at 10 to 100°C to give lithium hydrosulfide, and then the reaction liquid may be processed for hydrogen sulfide removal to give lithium sulfide (JP 2011-84438 A).

In the absence of a solvent, lithium hydroxide may be reacted with hydrogen sulfide to give lithium sulfide. The reaction temperature in this case is, for example, 20 to 300°C, 100 to 250°C, or 120 to 240°C.

As the solid raw materials containing a phosphorus element, for example, at least one of phosphorus sulfides such as diphosphorus trisulfide ($P_2S_3$), diphosphorus pentasulfide ($P_2S_5$), etc., silicon sulfide ($SiS_2$), germanium sulfide ($GeS_2$), boron sulfide ($B_2S_3$), gallium sulfide ($Ga_2S_3$), tin sulfide (SnS or $SnS_2$), aluminum sulfide ($Al_2S_3$), zinc sulfide (ZnS), phosphorus compounds such as sodium phosphate ($Na_3PO_4$), etc., and phosphorus elementary substance is preferred. The phosphorus compound is preferably a phosphorus sulfide, and diphosphorus pentasulfide ($P_2S_5$) is more preferred. Phosphorus compounds such as diphosphorus pentasulfide ($P_2S_5$) and a phosphorus elementary substance may be any ones that are industrially produced and commercially available, with no specific limitation for use herein.

The solid raw materials containing a lithium element, a phosphorus element and a sulfur element preferably contain at least one of a lithium compound and a lithium metal elementary substance, and at least one of a phosphorus compound and a phosphorus elementary substance. Above all, a combination of a lithium compound and a phosphorus compound is preferred, a combination of a lithium compound and a phosphorus sulfide is more preferred, a combination of a lithium sulfide and a phosphorus sulfide is even more preferred, and a combination of a lithium sulfide and a diphosphorus pentasulfide is especially more preferred.

Not specifically limited, the amount of the lithium element-containing solid raw materials and the phosphorus element-containing solid raw materials to be used may be adequately determined based on the desired solid electrolyte. For example, when lithium sulfide ($Li_2S$) is used as the lithium element-containing solid raw material and when diphosphorus pentasulfide ($P_2S_5$) is used as the phosphorus element-containing solid raw material, the ratio of $Li_2S$ to the total of $Li_2S$ and $P_2S_5$ is, from the viewpoint of obtaining an amorphous solid electrolyte having high chemical stability, preferably within a range of 68 to 82 mol%, more preferably within a range of 70 to 80 mol%, even more preferably within a range of 72 to 78 mol%, and especially more preferably within a range of 74 to 76 mol%.

Also preferably, the solid raw materials further contain at least one kind of halogen elements such as fluorine (F), chlorine (Cl), bromine (Br) and iodine (I), more preferably at least one of chlorine (Cl), bromine (Br) and iodine (I), even more preferably at least one of bromine (Br) and iodine (I). For example, a halogen-containing compound represented by the following general formula (1) is preferably contained.

$$M_l-X_m \qquad (1)$$

In the general formula (1), M represents sodium (Na), lithium (Li), boron (B), aluminum (Al), silicon (Si), phosphorus (P), sulfur (S), germanium (Ge), arsenic (As), selenium (Se), tin (Sn), antimony (Sb), tellurium (Te), lead (Pb), bismuth (Bi), or those formed of the element with an oxygen element and a sulfur element bonding thereto. Lithium (Li) or phosphorus (P) is preferred, and lithium (Li) is especially preferred.

X represents a halogen element selected from fluorine (F), chlorine (Cl), bromine (Br) and iodine (I).

1 is an integer of 1 or 2, and m is an integer of 1 to 10. When m is an integer of 2 to 10, that is, when the formula has plural X's, X's may be the same or different. For example, regarding $SiBrCl_3$ to be mentioned below, m is 4, and X are different elements of Br and Cl.

Specifically, examples of the halogen-containing compound represented by the above general formula (1) include sodium halides such as NaI, NaF, NaCl, NaBr, etc.; lithium halides such as LiF, LiCl, LiBr, LiI, etc., boron halides such as $BCl_3$, $BBr_3$, $BI_3$, etc., aluminum halides such as $AlF_3$, $AlBr_3$, $AlI_3$, $AlCl_3$, etc., silicon halides such as $SiF_4$, $SiCl_4$, $SiCl_3$, $Si_2Cl_6$, $SiBr_4$, $SiBrCl_3$, $SiBr_2Cl_2$, $SiI_4$, etc. phosphorus halides such as $PF_3$, $PF_5$, $PCl_3$, $PCl_5$, $POCl_3$, $PBr_3$, $POBr_3$, $PI_3$, $P_2Cl_4$, $P_2I_4$, etc., sulfur halides such as $SF_2$, $SF_4$, $SF_6$, $S_2F_{10}$, $SCl_2$, $S_2Cl_2$, $S_2Br_2$, etc., germanium halides such as $GeF_4$, $GeCl_4$, $GeBr_4$, $GeI_4$, $GeF_2$, $GeCl_2$, $GeBr_2$, $GeI_2$, etc., arsenic halides such as $AsF_3$, $AsCl_3$, $AsBr_3$, $AsI_3$, $AsF_5$, etc., selenium halides such as $SeF_4$, $SeF_6$, $SeCl_2$, $SeCl_4$, $Se_2Br_2$, $SeBr_4$, etc., tin halides such as $SnF_4$, $SnCl_4$, $SnBr_4$, $SnI_4$, $SnF_2$, $SnCl_2$, $SnBr_2$, $SnI_2$, etc., antimony halides such as $SbF_3$, $SbCl_3$, $SbBr_3$, $SbI_3$, $SbF_5$, $SbCl_5$, etc., tellurium halides such as $TeF_4$, $Te_2F_{10}$, $TeF_6$, $TeCl_2$, $TeCl_4$, $TeBr_2$, $TeBr_4$, $TeI_4$, etc., lead halides such as $PbF_4$, $PbCl_4$, $PbF_2$, $PbCl_2$, $PbBr_2$, $PbI_2$, etc., bismuth halides such as $BiF_3$, $BiCl_3$, $BiBr_3$, $BiI_3$, etc.

As the above-mentioned halogen-containing compound, lithium halides such as lithium chloride (LiCl), lithium bromide (LiBr), lithium iodide (LiI), etc., and phosphorus halides such as phosphorus pentachloride ($PCl_5$), phosphorus trichloride ($PCl_3$), phosphorus pentabromide ($PBr_5$), phosphorus tribromide ($PBr_3$), etc. are preferred. Above all, lithium halides such as lithium chloride (LiCl), lithium bromide (LiBr), lithium iodide (LiI), etc., and phosphorus tribromide ($PBr_3$) are preferred; and lithium halides such as lithium chloride (LiCl), lithium bromide (LiBr), lithium iodide (LiI), etc. are more preferred; and lithium bromide (LiBr) and lithium iodide (LiI) are especially preferred. As the halogen-containing compound, one alone or two or more kinds of the above-mentioned compounds may be used either singly or as combined. Namely, at least one of the above-mentioned compounds may be used.

For example, in the case where lithium bromide (LiBr) and lithium iodide (LiI) are used as the halogen-containing compound, the total amount to be used of lithium bromide (LiBr) and lithium iodide (LiI) in the solid raw materials for use for production of an amorphous solid electrolyte is not specifically limited so far as the ratio can give a desired amorphous solid electrolyte, but for example, the amount preferably falls within a range of 3 to 40 mol%, more preferably within a range of 3 to 35 mol%, even more preferably within a range of 3 to 30 mol%. For example, the amount may fall within a range of 5 mol% or more and 28 mol% or less, a range of 8 mol% or more and 28 mol% or less, a range of 10 mol% or more and 28 mol% or less, a range of 12 mol% or more and 28 mol% or less, or a range of 15 mol% or more and 28 mol% or less.

The proportion of lithium bromide (LiBr) to the total of lithium bromide (LiBr) and lithium iodide (LiI) (LiBr/(LiI + LiBr)) is not specifically limited, and any desired ratio may be employed, but the proportion is preferably such that an Li ion conductivity not lower than the same level relative to the amorphous solid electrolyte (amorphous solid electrolyte as a comparative subject) prepared in the same manner except that lithium bromide (LiBr) is substituted with lithium iodide (LiI) could be obtained, and more preferably such that an Li ion conductivity higher than the comparative subject, amorphous solid electrolyte can be obtained. The proportion of the above-mentioned lithium bromide (LiBr) is, for example, within a range of 1 to 99 mol%, more preferably within a range of 5 to 75 mol%. For example, the proportion may fall within a range of 20 mol% or more and 75 mol% or less, or 40 mol% or more and 72 mol% or less, or 50 mol% or more and 70 mol% or less.

Preferably, the proportion of lithium iodide (LiI) in all the materials for use in production of the amorphous solid electrolyte is more than 3 mol% but less than 20 mol%, and the proportion of lithium bromide (LiBr) in all the materials is preferably 3 to 20 mol%.

In the case where the amorphous solid electrolyte has a composition of $a((1-b)LiI \cdot bLiBr) \cdot (1-a)(cLi_2S \cdot (1-c)P_2S_5)$, a corresponds to the total proportion of the above-mentioned LiI and LiBr, b corresponds to the proportion of the above-mentioned LiBr, and c corresponds to the proportion of the above-mentioned $Li_2S$.

The particle size of the above-mentioned solid raw materials may be any particle size that each of the above-mentioned raw materials generally has with no specific limitation. For example, the particle size of lithium sulfide may be 0.01 to 3 mm, the particle size of diphosphorus pentasulfide may be 0.01 to 3 mm. The particle size of lithium bromide may be 0.01 to 3 mm, and the particle size of lithium iodide may be 0.01 to 3 mm. In that manner, the particle size range of the solid raw materials for use in the present invention is broad, and using a multi-axial kneading machine, a solid electrolyte can be produced irrespective of the particle size of the solid raw materials. Here, the mean particle size is a value to be measured using a laser diffractometric particle sizer (for example, Master Sizer 2000 manufactured by Malvern Instruments, Ltd.).

The above-mentioned solid raw materials may be used directly as they are, but may be used in the form of a slurry thereof with an organic solvent. In the present invention, in consideration of productivity and mass-productivity, an organic solvent is used as little as possible, and using solid raw materials directly as they are, that is, using them in a solid state is preferred in reaction.

Depending on the kind of solid raw materials, production would be easy along with using an organic solvent. The organic solvent for use in such a case includes an aprotic solvent such as an aprotic polar solvent or an aprotic non-polar solvent.

Examples of the aprotic polar organic compound include amide compounds, lactam compounds, urea compounds, organic sulfur compounds, cyclic organic phosphorus compounds, etc.

The aprotic non-polar solvent includes a solvent composed of carbon atoms and hydrogen atoms alone, for example, a hydrocarbon-based organic solvent such as a saturated hydrocarbon, an unsaturated hydrocarbon, an aromatic hydrocarbon, etc. The carbon number of the saturated hydrocarbon and the unsaturated hydrocarbon is, for example, 3 or more and 50 or less, and the carbon number of the aromatic hydrocarbon is, for example, 6 or more and 50 or less.

The saturated hydrocarbon includes hexane, pentane, 2-ethylhexane, heptane, octane, decane, cyclohexane, methylcyclohexane, IP Solvent 1016 (manufactured by Idemitsu Kosan Co., Ltd.), IP Solvent 1620 (manufactured by Idemitsu Kosan Co., Ltd.), etc.; the unsaturated hydrocarbon includes hexene, heptene, cyclohexene, etc.; and the aromatic hydrocarbon includes toluene, xylene, ethylbenzene, decalin, 1,2,3,4-tetrahydronaphthalene, Ipsol 100 (manufactured by Idemitsu Kosan Co., Ltd.), Ipsol 150 (manufactured by Idemitsu Kosan Co., Ltd.), etc.

As needed, any other solvent may be added to the above-mentioned hydrocarbon-based organic solvent. Specifically, there are mentioned ketones such as acetone, methyl ethyl ketone, etc.; ethers such as tetrahydrofuran, etc.; alcohols such as ethanol, butanol, etc.; esters such as ethyl acetate, etc.; halogenohydrocarbons such as dichloromethane, chlorobenzene, etc.

In the present invention, one alone or two or more kinds of these organic solvents may be used either singly or as combined.

In the case where an organic solvent is used, the amount thereof to be used is preferably such that the total amount of the solid raw materials to be added relative to 1 liter of the organic solvent could be 0.001 to 1 kg, more preferably 0.005 to 0.5 kg, more preferably 0.01 to 0.3 kg. The amount of the organic solvent to be used is preferably as small as possible.

(Multi-axial Kneading Machine)

The multi-axial kneading machine for use in the production method of the present invention is, for example, provided with a casing and two or more rotary shafts arranged to run through the casing in the longitudinal direction and equipped with paddles (screw blades) along the axial direction, in which one end in the longitudinal direction of the casing is provided with a supply port for solid raw materials and the other end is provided with a discharge port, and the machine is not specifically limited in point of the other constitution. It is considered that, by rotating the two or more rotary shafts provided with the paddles in such a multi-axial kneading machine, two or more rotary movements may interact with each other to form shearing stress, and the shearing stress may be imparted to the solid raw materials moving from the supply port toward the discharge port along the rotary axis, and the raw materials could be thereby reacted.

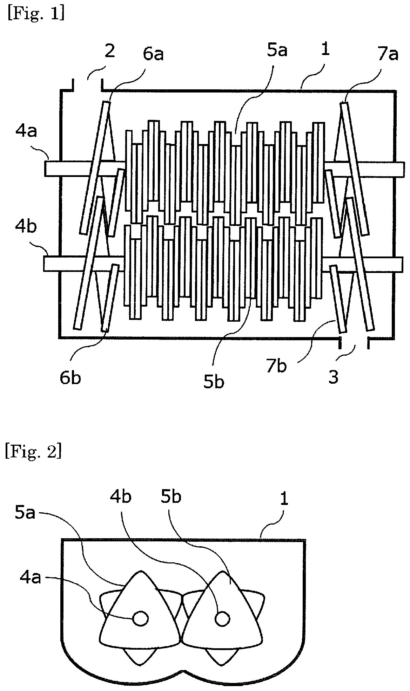

One preferred example of the multi-axial kneading machine usable in the present invention is described with reference to Figs. 1 and 2. Fig. 1 is a plane view cut at the center of a rotary shaft of a kneading machine, and Fig. 2 is a plan view cut vertically to the rotary shaft in a part provided with paddles of the rotary shaft.

The multi-axial kneading machine shown in Fig. 1 is a biaxial kneading machine provided with a casing 1 provided with a supply port 2 at one end and a discharge port 3 at the other end, and two rotary shafts 4a and 4b arranged to run through in the longitudinal direction of the casing 1. The rotary shafts 4a and 4b each are provided with paddles 5a and 5b, respectively. Solid raw materials enter the casing 1 via the supply port 2, and are reacted with each other as given shearing stress at the paddles 5a and 5b, and the resultant reaction product, that is, an amorphous solid electrolyte is discharged out via the discharge port 3.

Not specifically limited, the number of rotary shafts 4 (4a, 4b) may be 2 or more, and in consideration of general versatility, the number is preferably 2 to 4, more preferably 2.

The rotary shafts 4 may be parallel shafts that are parallel to each other, or may be oblique shafts, and the rotating direction of the rotary shafts may be in the same direction or in different directions. For obtaining a better kneading effect, the rotating direction is preferably in different directions, or in the case where a self-cleaning effect of sweeping up the solid raw materials and the reaction product in the casing and preventing them from staying in the casing is considered to be important, the same direction may be selected for the rotating direction.

Paddles 5 (5a, 5b) are fixed to the rotary shafts for kneading solid raw materials, and are referred to as screw blades. Not specifically limited, the cross-sectional form thereof includes, as shown in Fig. 2, a nearly triangle form modified from a regular triangle by making each side thereof have a uniformly convexed arc, and in addition thereto, a circular form, an oval form, a nearly square form, etc., and may additionally include modifications based on these forms and having a partial cutout.

In the case where the machine is provided with plural paddles, each paddle may be fixed to the rotary shaft at a different angle, as shown in Fig. 2. The paddles may be engaging ones or non-engaging ones, but for obtaining a better kneading effect, engaging paddles may be selected.

For smoothly supplying solid raw materials thereinto, the multi-axial kneading machine may be provided with screws 6 (6a, 6b) on the side of the supply port 2 as shown in Fig. 1, and for preventing the reaction product obtained via the paddles 5 from staying inside the casing, reverse screws 7 (7a, 7b) may be arranged on the side of the discharge port 3 as shown in Fig. 1.

A commercially-available kneading machine may be used as the multi-axial kneading machine. Examples of the commercially-available multi-axial kneading machines include KRC Kneader, KRC Junior (manufactured by Kurimoto, Ltd.), etc., and depending on the kinds of solid raw materials and on the desired scale, the machine may be adequately selected.

For producing an amorphous solid electrolyte, a mechanical milling method, a slurry method, a melting and rapidly cooling method and the like have heretofore been generally employed, as described above. These methods could not be said to be excellent in productivity and mass-productivity since they require a special equipment or must use a hydrocarbon-based organic solvent. However, by reacting solid raw materials using a generalized machine such as a multi-axial kneading machine as in the present invention, excellent productivity and mass-productivity could be realized, as compared with these conventional production methods.

(Reaction Conditions)

In the present invention, the reaction temperature for the solid raw materials is preferably not higher than the crystallization temperature of the amorphous solid electrolyte obtained by the reaction of the solid raw materials. By reacting solid raw materials at such a temperature, an amorphous solid electrolyte can be obtained as a reaction product thereof.

Here, the crystallization temperature in the present invention is a crystallization temperature of an amorphous solid electrolyte, and can be confirmed and measured through differential thermal analysis (DTA). For example, using a differential thermal analyzer (DTA device), a sample is heated at a heating condition of 10°C/min for differential thermal analysis (DTA), in which a temperature indicating the exothermic peak to be detected on the lowermost side is the crystallization temperature of the sample.

The crystallization temperature differs depending on the kind and the compositional ratio of the elements constituting the resultant amorphous solid electrolyte and on the difference in the structure thereof, and the crystallization temperature of an $Li_2S$-$P_2S_5$-based amorphous solid electrolyte falls, for example, within a range of 210 to 340°C, the crystallization temperature of an $Li_2S$-$P_2S_5$-LiBr-based amorphous solid electrolyte falls, for example, within a range of 170 to 290°C, the crystallization temperature of an $Li_2S$-$P_2S_5$-LiI-based amorphous solid electrolyte falls, for example, within a range of 140 to 260°C, and the crystallization temperature of an $Li_2S$-$P_2S_5$-LiI-LiBr-based amorphous solid electrolyte temperature falls, for example, within a range of 140 to 260°C. The reaction temperature in producing these amorphous solid electrolytes may be one not higher than the crystallization temperature thereof.

In the present invention, the reaction temperature is, from the viewpoint of obtaining an amorphous solid electrolyte, preferably one not higher than the crystallization temperature thereof, more preferably the crystallization temperature -150 to -1°C, even more preferably -100 to -5°C, especially preferably -80 to -30°C.

As a method for controlling the reaction temperature for solid raw materials, a method generally used in a multi-axial kneading machine may be employed. For example, the method includes a method of controlling the supply amount of solid raw materials, a method of controlling the driving power, a method of controlling the rotation number, a method of cooling the system, etc. In the method of controlling the supply amount of solid raw materials, in general, when the supply amount is reduced, the temperature tends to lower. In the method of controlling driving power, in general, when the driving power is reduced, the temperature tends to lower. In the method of controlling the rotation number, in general, when the rotation number is decreased, the temperature tends to lower.

Preferably, the reaction of solid raw materials is carried out while cooling from the viewpoint of obtaining an amorphous solid electrolyte. The cooling method may be any of a water-cooling method or an air-cooling method, but in consideration of cooling efficiency, water-cooling is preferred.

For example, cooling may be attained by a method of arranging a water-cooling jacket around the casing of a multi-axial kneading machine, or a method of introducing cooling water to run through the rotary shaft for in-shaft cooling.

The rotation number of the rotary shaft of the multi-axial kneading machine differs, depending on the kind and the compositional ratio of the elements constituting the amorphous solid electrolyte to be produced and on the difference in the structure thereof, and therefore could not be indiscriminately stated, but is preferably 40 to 300 rpm, more preferably 40 to 250 rpm, even more preferably 40 to 200 rpm.

Regarding the reaction of solid raw materials, the amorphous solid electrolyte to be obtained may change when brought into contact with water or oxygen, and therefore, supply and reaction of the solid raw materials as well as discharge of the reaction product are preferably carried out in an inert gas atmosphere. In this case, the inert gas includes nitrogen, argon, etc.

Also preferably, the reaction of solid raw materials is carried out in a dry atmosphere, for example, preferably in an atmosphere at the dew point - 90°C or higher and -40°C or lower, more preferably in an atmosphere at the dew point - 90°C or higher and -45°C or lower, even more preferably at the dew point - 90°C or higher and -50°C or lower. For realizing this, for example, a method of arranging the multi-axial kneading machine in a glove box, or a method of arranging the multi-axial kneading machine in a dry room may be employed. Also for example, a method of continuously supplying the above-mentioned inert gas into the casing of the multi-axial kneading machine can realize the above. In this case, the casing of the multi-axial kneading machine may be provided with a supply port and a discharge port for an inert gas.

The reaction time for the solid raw materials varies depending on the kind and the compositional ratio of the elements to constitute the amorphous solid electrolyte to be obtained, on the difference in the structure thereof, and on the temperature at the reaction, and therefore may be adequately controlled. Preferably, the time is 5 minutes to 50 hours, more preferably 10 minutes to 15 hours, even more preferably 1 to 12 hours.

In using the multi-axial kneading machine, the reaction product discharged out through the discharge port may be again supplied thereinto through the supply port depending on the degree of the reaction procedure to thereby further carry out the reaction. The degree of reaction procedure may be known by the change of the peaks derived from the solid electrolyte raw materials, and at the time when the peaks could be detected no more, it may be considered that the reaction has fully proceeded.

(Amorphous Solid Electrolyte)

The amorphous solid electrolyte obtained according to the production method of the present invention includes a solid electrolyte that contains, for example, at least one element selected from alkali metals such as lithium, sodium, potassium, rubidium, cesium, francium, etc., and alkaline earth metals such as beryllium, magnesium, calcium, strontium, barium, radium, etc., as a conductive species. Among those elements, in consideration of the ability of high ion conductivity and the ability to realize high output power of batteries, an alkali metal such as lithium, sodium, potassium, rubidium, cesium, francium, etc., and beryllium are preferred, and lithium is especially preferred.

The amorphous solid electrolyte includes an amorphous oxide solid electrolyte, an amorphous sulfide solid electrolyte, etc., and in consideration of the ability of high ion conductivity and the ability to realize high output power of batteries, an amorphous sulfide solid electrolyte is preferred.

Examples of the amorphous sulfide solid electrolyte include an amorphous sulfide solid electrolyte containing a lithium element, a phosphorus element and a sulfur element, an amorphous sulfide solid electrolyte containing a lithium element, a phosphorus element, a sulfur element and a halogen element, an amorphous sulfide solid electrolyte containing a lithium element, a phosphorus element, a sulfur element and a bromine element, an amorphous sulfide solid electrolyte containing a lithium element, a phosphorus element, a sulfur element and an iodine element, and an amorphous sulfide solid electrolyte containing a lithium element, a phosphorus element, a sulfur element, a bromine element and an iodine element. More specifically, the amorphous sulfide solid electrolyte includes $Li_2S-P_2S_5$, $Li_2S-P_2S_5-LiI$, $Li_2S-P_2S_5-LiCl$, $Li_2S-P_2S_5-LiBr$, $Li_2S-P_2S_5-LiI-LiBr$, $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n each are a positive number, Z represents any of Si, Ge, Zn, Ga, Sn, Al), $Li_2S-GeS_2$, $Li_2S-SiS_2-Li_3PO_4$, $Li_2S-SiS_2-Li_x-MO_y$ (x and y each are a positive number, M represents any of P, Si, Ge, B, Al, Ga, In), $Li_{10}GeP_2S_{12}$, etc.

The amorphous oxide solid electrolyte includes $Li_2O-B_2O_3-P_2O_5$, $Li_2O-SiO_2$, LiLaTaO (for example, $Li_5La_3Ta_2O_{12}$), LiLaZrO (for example, $Li_7La_3Zr_2O_{12}$), LiBaLaTaO (for example, $Li_6BaLa_2Ta_2O_{12}$), $Li_{1+x}Si_xP_{1-x}O_4$ (0 ≤ x < 1, for example, $Li_{3.6}Si_{0.6}P_{0.4}O_4$), $Li_{1+x}Al_xGe_{2-x}(PO_4)_3$ (0 ≤ x ≤ 2), $Li_{1+x}Al_xTi_{2-x}(PO_4)_3$ (0 ≤ x ≤ 2), $Li_3PO_{(4-3/2x)}N_x$ (0 ≤ x < 1), etc.

The kind of the elements constituting the amorphous solid electrolyte obtained according to the production method of the present invention can be identified, for example, by an ICP emission spectrometer.

An example of the shape of the amorphous solid electrolyte obtained in the present invention is a granular one, though not specifically limited thereto. Preferably, the mean particle size ($D_{50}$) of the granular amorphous solid electrolyte is, for example, within a range of 0.1 to 50 μm. The mean particle size ($D_{50}$) is a particle size to reach 50% of all the particles in sequential cumulation from the smallest particles in drawing the particle size distribution cumulative curve, and the volume distribution can be determined, for example, using a laser diffraction/scattering particle size distribution measuring apparatus.

[Crystalline Solid Electrolyte and Its Production Method]

According to the production method of the present invention as described above, a material whose X-ray diffraction pattern in X-ray diffractmetry is a halo pattern substantially not showing any other peak than the materials-derived peaks irrespective of the presence or absence of solid electrolyte raw materials-derived peaks, that is, an amorphous solid electrolyte can be obtained, and by heat-treating it for crystallization, a crystalline solid electrolyte can be obtained. The production method for the crystalline solid electrolyte of the present invention includes producing a solid electrolyte according to the above-mentioned production method followed by heating the solid electrolyte.

In the present invention, the crystalline solid electrolyte is a solid electrolyte material whose X-ray diffraction pattern in X-ray diffractometry gives a solid electrolyte-derived peak, irrespective of the presence or absence of solid electrolyte raw materials-derived peaks. Specifically, the crystalline solid electrolyte contains a crystal structure derived from the solid electrolyte, in which a part of the crystal structure may be a crystal structure derived from the solid electrolyte, or all the crystal structure may be a crystal structure derived from the solid electrolyte. With that, the crystalline solid electrolyte may partly contain an amorphous solid electrolyte so far as it has the above-mentioned X-ray diffraction pattern.

The crystalline solid electrolyte includes a crystalline oxide solid electrolyte, a crystalline sulfide solid electrolyte, etc. From the viewpoint of the ability of high ion conductivity and the ability to realize high output power of batteries, a crystalline sulfide solid electrolyte is preferred.

The crystalline sulfide solid electrolyte includes a crystalline sulfide solid electrolyte containing a lithium element, a phosphorus element and a sulfur element, a crystalline sulfide solid electrolyte containing a lithium element, a phosphorus element, a sulfur element and a halogen element, a crystalline sulfide solid electrolyte containing a lithium element, a phosphorus element, a sulfur element and a bromine element, a crystalline sulfide solid electrolyte containing a lithium element, a phosphorus element, a sulfur element and an iodine element, and a crystalline sulfide solid electrolyte containing a lithium element, a phosphorus element, a sulfur element, a bromine element and an iodine element.

More specifically, the crystal structure of the crystalline solid electrolyte includes an $Li_3PS_4$ crystal structure, an $Li_4P_2S_6$ crystal structure, an $Li_7PS_6$ crystal structure, an $Li_7P_3S_{11}$ crystal structure, an $Li_{4-x}Ge_{1-x}P_xS_4$-based thio-LISICON Region II-type crystal structure (see Kanno, et al., Journal of The Electrochemical Society, 148 (7) A742-746 (2001)), a crystal structure similar to the $Li_{4-x}Ge_{1-x}P_xS_4$-based thio-LISICON Region II-type crystal structure (see Solid State Ionics, 177 (2006), 2721-2725), etc.

In X-ray diffractometry thereof using a CuKα ray, the $Li_3PS_4$ crystal structure gives diffraction peaks, for example, at around 2θ = 17.5°, 18.3°, 26.1°, 27.3°, 30.0°; the $Li_4P_2S_6$ crystal structure gives diffraction peaks, for example, at around 2θ = 16.9°, 27.1°, 32.5°; the $Li_7PS_6$ crystal structure gives diffraction peaks, for example, at around 2θ = 15.3°, 25.2°, 29.6°, 31.0°; the $Li_7P_3S_{11}$ crystal structure gives diffraction peaks, for example, at around 2θ = 17.8°, 18.5°, 19.7°, 21.8°, 23.7°, 25.9°, 29.6°, 30.0°; the $Li_{4-x}Ge_{1-x}P_xS_4$-based thio-LISICON Region II-type crystal structure gives diffraction peaks, for example, at around 2θ = 20.1°, 23.9°, 29.5°; and the crystal structure similar to the $Li_{4-x}Ge_{1-x}P_xS_4$-based thio-LISICON Region II-type crystal structure gives diffraction peaks, for example, at around 2θ = 20.2, 23.6°. The position of these peaks may vary within a range of ±0.5°.

The crystal structure of the crystalline solid electrolyte also includes an argyrodite-type crystal structure. Examples of the argyrodite-type crystal structure include an $Li_7PS_6$ crystal structure; a crystal structure represented by a compositional formula $Li_{7-x}P_{1-y}Si_yS_6$ or $Li_{7+x}P_{1-y}Si_yS_6$ (x is -0.6 to 0.6, y is 0.1 to 0.6) which has a structure skeleton of $Li_7PS_6$ and in which a part of P is substituted with Si; a crystal structure represented by $Li_{7-x-2y}PS_{6-x-y}Cl_x$ (0.8 ≤ x ≤ 1.7, 0 < y ≤ -0.25x + 0.5); a crystal structure represented by $Li_{7-x}PS_{6-x}Ha_x$ (Ha represents Cl or Br, x is preferably 0.2 to 1.8).

The crystal structure represented by a compositional formula $Li_{7-x}P_{1-y}Si_yS_6$ or $Li_{7+x}P_{1-y}Si_yS_6$ (x is -0.6 to 0.6, y is 0.1 to 0.6), which has the above-mentioned structure skeleton of $Li_7PS_6$ and in which a part of P is substituted with Si, is a cubic crystal or a rhombic crystal, and is preferably a cubic crystal, and in X-ray diffractometry using a CuKα ray, the crystal structure gives peaks appearing mainly at 2θ = 15.5°, 18.0°, 25.0°, 30.0°, 31.4°, 45.3°, 47.0°, and 52.0°. The crystal structure represented by the above-mentioned compositional formula $Li_{7-x-2y}PS_{6-x-y}Cl_x$ (0.8 ≤ x ≤ 1.7, 0 < y ≤ -0.25x + 0.5) is preferably a cubic crystal, and in X-ray diffractometry using a CuKα ray, the crystal structure gives peaks appearing mainly at 2θ = 15.5°, 18.0°, 25.0°, 30.0°, 31.4°, 45.3°, 47.0°, and 52.0°. The crystal structure represented by the above-mentioned compositional formula $Li_{7-x}PS_{6-x}Ha_x$ (Ha represents Cl or Br, x is preferably 0.2 to 1.8) is preferably a cubic crystal, and in X-ray diffractometry using a CuKα ray, the crystal structure gives peaks appearing mainly at 2θ = 15.5°, 18.0°, 25.0°, 30.0°, 31.4°, 45.3°, 47.0°, and 52.0°.

These peak positions may vary within a range of ±0.5°.

The crystal structure of the crystalline solid electrolyte includes one represented by a compositional formula $Li_xSi_yP_zS_aHa_w$ (Ha includes any one or more of Br, Cl, I and F, 2.4 < (x-y)/(y+z) < 3.3) and having an S content of 55 to 73% by mass, an Si content of 2 to 11% by mass and an Ha element content of 0.02% by mass or more, more preferably a crystal structure that gives, in X-ray diffractometry using a CuKα ray, peaks derived from an Li-Si-P-S-type crystal structure and appearing at 2θ = 20.2°, 24.0°, and 29.7°, and peaks appearing at 2θ = 24.8° to 26.1°. These peak positions may vary within a range of ±0.5°.

In the heat treatment for the amorphous solid electrolyte, the heat treatment temperature is preferably within a range of ±40°C from the peak top, as the origination, of the exothermic peak detected on the lowermost temperature side in differential thermal analysis (DTA) thereof at a heating condition of 10°C/min using a differential thermal analyzer (DTA device), more preferably ±30°C, even more preferably ±20°C.

Not specifically limited, the heat treatment time may be any time in which the desired crystalline solid electrolyte can be obtained but is, for example, preferably within a range of 1 minute or more and 24 hours or less, more preferably within a range of 1 minute or more and 10 hours or less.

Preferably, the heat treatment is carried out in an inert gas atmosphere (for example, nitrogen atmosphere, argon atmosphere), or in a reduced-pressure atmosphere (especially in vacuum). This is because the crystalline solid electrolyte can be protected from degradation (for example, oxidation). The heat treatment method is not specifically limited. For example, a method of using a vacuum heating device, an argon gas atmosphere furnace, a firing furnace or the like may be employed.

The amorphous solid electrolyte obtained according to the production method of the present invention, and the crystalline solid electrolyte obtained by heat treatment of the solid electrolyte have a high ion conductivity and excellent battery performance, and are therefore favorably used in batteries. The solid electrolyte using a lithium element as the conductive species is especially favorable. The solid electrolyte obtained according to the production method of the present invention may be used in a positive electrode layer or a negative electrode layer, or may also be used in an electrolyte layer. Each layer may be produced according to a known method.

The above-mentioned battery preferably uses a collector in addition to the positive electrode layer, the electrolyte layer and the negative electrode layer, and the collector may be any known one. For example, a layer formed by coating Au, Pt, Al, Ti, Cu or the like capable of reacting with the above-mentioned solid electrolyte, with Au or the like may be used.

[Production Method for Inorganic Material]

The production method for an inorganic material of the present invention includes reacting two or more kinds of solid raw materials using a multi-axial kneading machine to give an amorphous inorganic material. Not specifically limited, the solid raw materials may be any ones that react with each other to give an amorphous inorganic material, and examples thereof include a zinc sulfide-type light emitting material, a molybdenum sulfide-type and vanadium alloy-type thermoelectric conversion materials, etc.

As the multi-axial kneading machine, the same one as that used in the above-mentioned production method for the solid electrolyte of the present invention may be employed.

The temperature at the reaction of the solid raw materials is preferably not higher than the crystallization temperature of the amorphous inorganic material obtained by the reaction of the solid raw materials, and the other reaction conditions are the same as those in the above-mentioned solid electrolyte production method, and by heat-treating the resultant amorphous inorganic material, a crystalline inorganic material can be obtained like in the above-mentioned solid electrolyte production method.

According to the production method for an inorganic material of the present invention, two or more kinds of solid raw materials may be reacted using a generalized machine such as a multi-axial kneading machine to produce a large variety of inorganic materials in a simplified manner with excellent productivity and mass-productivity.

[Multi-axial Kneading Machine]

The multi-axial kneading machine of the present invention is used for production of an amorphous solid electrolyte according to the production method for a solid electrolyte of the present invention that includes reacting two or more kinds of solid raw materials. The structure and the use conditions for the multi-axial kneading machine of the present invention are the same as those described hereinabove in the section of the above-mentioned solid electrolyte production method of the present invention.

Next, the present invention is described specifically with reference to Examples, but the present invention is not whatsoever restricted by these Examples.

(Measurement of Ion conductivity ($\sigma$))

The solid electrolytes obtained in Examples and Comparative Examples were respectively shaped into a form having a cross section of 10 mm$\phi$ (cross-sectional area S = 0.785 cm$^2$) and a height (L) of 0.1 to 0.3 cm, thereby preparing sample pieces. From the top and the bottom of the each sample piece, electrode terminals were taken, and the ion conductivity was measured according to an alternate current impedance method (frequency range: 5 MHz to 0.5 Hz, amplitude: 10 mV) to give a Cole-Cole plot. In the vicinity of the right end of the arc observed in the high-frequency side region, a real number part Z' ($\Omega$) at the point at which -Z" ($\Omega$) is the smallest was referred to as a bulk resistance R ($\Omega$) of the electrolyte, and according to the following equation, the ion conductivity $\sigma$ (S/cm) was calculated.

$$R = \rho(L/S)$$

$$\sigma = 1/\rho$$

In Examples, the lead distance was about 60 cm.

(Measurement of Purity of Lithium Sulfide)

The purity of lithium sulfide was measured by analysis with hydrochloric acid titration and silver nitrate titration. Specifically, the lithium sulfide powder obtained in Production Example was metered in a glove box (dew point: about -100°C, nitrogen atmosphere), dissolved in water, measured using a potentiometric titrator ("COM-980 (model number)", manufactured by Hiranuma Sangyo Co., Ltd.), and calculated.

(Production Example: Synthesis of lithium sulfide ($Li_2S$))

200 g of lithium hydroxide (LiOH) anhydride (manufactured by The Honjo Chemical Corporation) dried in a nitrogen flow current was put into a 500-ml separable flask equipped with a stirrer. This was heated in a nitrogen flow current, the internal temperature was kept at 200°C, and nitrogen was changed to hydrogen sulfide (manufactured by Sumitomo Seika Chemicals Co., Ltd.) and supplied at a flow rate of 500 mL/min to promote the reaction of lithium hydroxide and hydrogen sulfide. Water to form with the procedure of the reaction was condensed with a condenser and recovered. At the time when the reaction was carried out for 6 hours (6 hours after hydrogen sulfide introduction), 144 mL of water was recovered. The reaction was further continued for 3 hours, but there occurred no water generation. A powdery reaction product was recovered, and the purity thereof was measured according to the above-mentioned method, and the purity was 98.5%. In powdery X-ray diffractometry (XRD), the product gave a peak pattern peculiar to lithium sulfide ($Li_2S$).

(Example 1)

In a glove box filled with nitrogen, a feeder ("Micron Feeder (product name)", manufactured by Aishin Nano Technologies Co., Ltd.), and a biaxial kneading machine ("KRC Junior (product name)", paddle diameter: $\phi$8 mm, manufactured by Kurimoto, Ltd.) were arranged. A mixture of 3.828 g of lithium sulfide ($Li_2S$) obtained in Production Example and 6.172 g of diphosphorus pentasulfide ($P_2S_5$) ($Li_2S:P_2S_5$ = 75:25 (molar ratio)) as solid raw materials was fed to the supply port of the kneading machine from the feeder at a constant rate, and began to be kneaded at a mean motor torque of 0.4 Nm (load ratio: 40%) and at a screw revolution number of 150 rpm. In about 30 minutes after the solid raw materials were supplied from the supply port, a reaction product was discharged out from the discharge port. The discharged reaction product was again returned back to the feeder and the kneading operation was repeated.

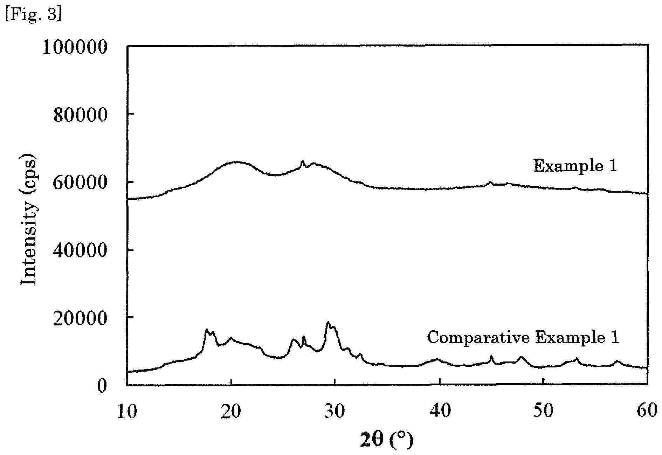

The resultant reaction product was analyzed through powdery X-ray diffractometry (XRD), and as shown in Fig. 3, the X-ray diffraction spectrum thereof represents a halo pattern with few peaks of lithium sulfide ($Li_2S$) and diphosphorus pentasulfide ($P_2S_5$), from which it is confirmed that the reaction product is an amorphous solid electrolyte. The temperature at the outer surface of the casing of the kneading machine during kneading was at most 50°C. The amorphous solid electrolyte obtained in this Example was subjected to differential thermal analysis (DTA) at a heating rate of 10°C/min using a differential thermal analyzer (DTA device), and the crystallization temperature (Tc) thereof was 230°C.

(Comparative Example 1)

A reaction product was obtained in the same manner as in Example 1 except that the mean motor torque was 0.8 Nm (load ratio: 60%). The temperature at the outer surface of the casing of the kneading machine during kneading was at most 90°C.

The resultant reaction product was analyzed through powdery X-ray diffractometry (XRD), in which crystallization peaks ($\beta Li_3PS_4$, etc.) relating to the solid electrolyte-derived crystal structure were detected, and partial crystallization was confirmed. The ion conductivity was $2 \times 10^{-4}$ S/cm.

(Example 2)

A reaction product was obtained in the same manner as in Example 1, except that, in Example 1, the solid raw materials were a mixture of 2.78 g of lithium sulfide ($Li_2S$), 4.435 g of diphosphorus pentasulfide ($P_2S_5$), 1.425 g of lithium iodide (LiI), and 1.385 g of lithium bromide (LiBr) ($Li_2S:P_2S_5:LiI:LiBr$ = 56.25:18.75:10:15 (molar ratio)), and the screw revolution number was 100 rpm.

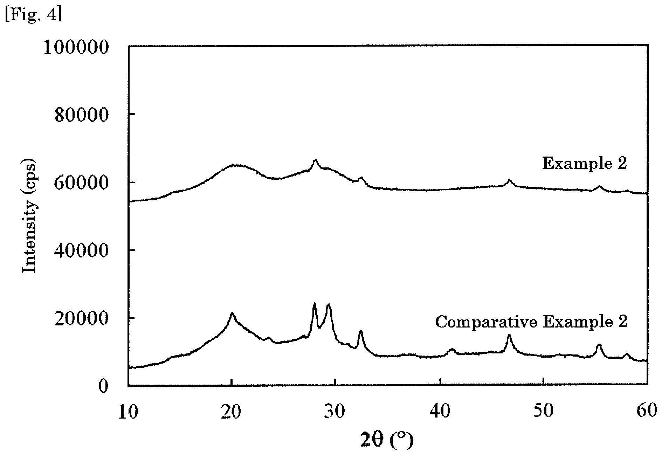

The resultant reaction product was analyzed through powdery X-ray diffractometry (XRD), and as shown in Fig. 4, the X-ray diffraction spectrum thereof represents a halo pattern with few peaks of lithium sulfide ($Li_2S$), diphosphorus pentasulfide ($P_2S_5$) and lithium iodide (LiI) though giving a small peak of lithium bromide (LiBr), from which it is confirmed that the reaction product is an amorphous solid electrolyte. The reaction product was heat-treated at 200°C for 3 hours, and the ion conductivity of the resultant product measured according to the above-mentioned method was $4 \times 10^{-3}$ S/cm. The temperature at the outer surface of the casing of the kneading machine during kneading was at most 40°C.

The amorphous solid electrolyte obtained in this Example was subjected to differential thermal analysis (DTA) at a heating rate of 10°C/min using a differential thermal analyzer (DTA device), and the glass crystallization temperature (Tc) thereof was 170°C.

(Comparative Example 2)

A reaction product was obtained in the same manner as in Example 2 except that the mean motor torque was 0.8 Nm (load ratio: 60%). The temperature at the outer surface of the casing of the kneading machine during kneading was at most 80°C.

The resultant reaction product was analyzed through powdery X-ray diffractometry (XRD), in which crystallization peaks (thio-LISICON Region II, etc.) relating to the solid electrolyte-derived crystal structure were detected, and partial crystallization was confirmed. The product was heat-treated at 200°C for 3 hours, and the ion conductivity of the resultant product measured according to the above-mentioned method was $3 \times 10^{-3}$

S/cm.

(Example 3)

A reaction product was obtained in the same manner as in Example 2, except that, in Example 2, a cooling jacket was arranged around the casing part of the kneading machine and a cooling medium at -5°C was circulated therethrough to cool the casing part, and the mean motor torque was 0.8 Nm (load ratio: 60%).

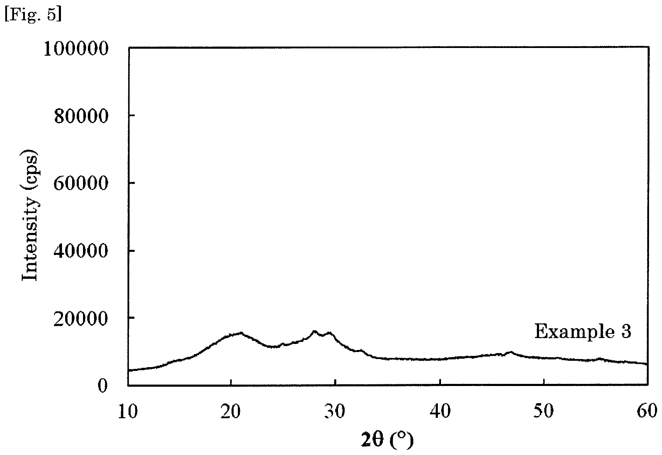

The resultant reaction product was analyzed through powdery X-ray diffractometry (XRD), and as shown in Fig. 5, the X-ray diffraction spectrum thereof represents a halo pattern with few peaks of lithium sulfide ($Li_2S$), diphosphorus pentasulfide ($P_2S_5$) and lithium iodide (LiI) though giving a small peak of lithium bromide (LiBr), from which it is confirmed that the reaction product is an amorphous solid electrolyte. The reaction product was heat-treated at 200°C for 3 hours, and the ion conductivity of the resultant product measured according to the above-mentioned method was $4 \times 10^{-3}$ S/cm. The temperature at the outer surface of the casing of the kneading machine during kneading was at most 10°C.

The amorphous solid electrolyte obtained from the raw materials used in this Example was subjected to differential thermal analysis (DTA) at a heating rate of 10°C/min using a differential thermal analyzer (DTA device), and the measured crystallization temperature (Tc) thereof was 167°C.

(Example 4)

A reaction product was obtained in the same manner as in Example 3, except that, in Example 3, the solid raw materials were a mixture of 3.271 g of lithium sulfide ($Li_2S$), 5.274 g of diphosphorus pentasulfide ($P_2S_5$), and 1.455 g of lithium bromide (LiBr) ($Li_2S:P_2S_5:LiBr = 63.75:21.25:15$(molar ratio)).

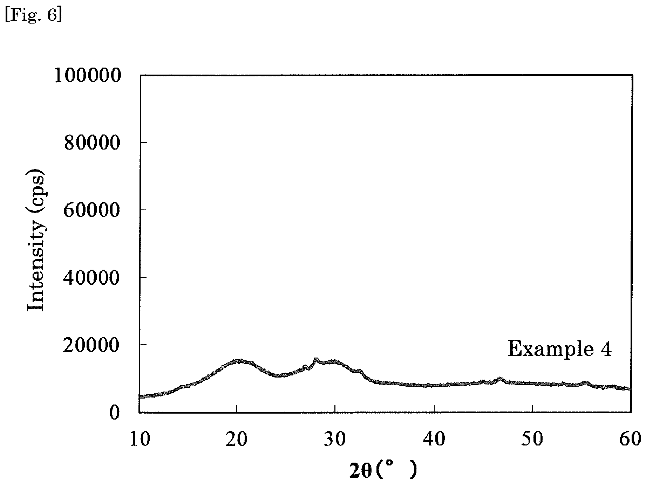

The resultant reaction product was analyzed through powdery X-ray diffractometry (XRD), and as shown in Fig. 6, the X-ray diffraction spectrum thereof represents a halo pattern with few peaks of lithium sulfide ($Li_2S$) and diphosphorus pentasulfide ($P_2S_5$) though giving a small peak of lithium bromide (LiBr), from which it is confirmed that the reaction product is an amorphous solid electrolyte.

The results in Examples confirm that, according to the production method of the present invention, an amorphous solid electrolyte can be obtained and that, according to the production method of the present invention, an amorphous solid electrolyte can be obtained with excellent productivity and mass-productivity in a simplified manner using a generalized machine such as a multi-axial kneading machine. Examples are compared with Comparative Examples, in which the temperature inside the casing, that is, the reaction temperature varies depending on the change of the motor torque, and the reaction temperature in Examples is considered to be not higher than the crystallization temperature (Tc) but the reaction temperature in Comparative Examples is considered to be higher than the crystallization temperature (Tc). The tendency of the reaction temperature to change can also be known from the temperature of the outer surface of the casing. In Examples, the reaction temperature was controlled by changing the motor torque, but the temperature control is not limited in point of the method so far as the reaction temperature could be a temperature not higher than the crystallization temperature, that is, the temperature control is not limited to motor torque change.

Industrial Applicability

According to the present invention, amorphous and crystalline solid electrolytes can be obtained with excellent productivity and mass-productivity. The amorphous and crystalline solid electrolytes have a high ion conductivity and have excellent battery performance and are therefore favorably used in batteries. Using a lithium element as the conductive species is especially preferred.

Reference Signs List

| 1 | Casing |
| 2 | Supply Port |
| 3 | Discharge Port |
| 4a, 4b | Rotary Shaft |
| 5a, 5b | Paddle |
| 6a, 6b | Screw |
| 7a, 7b | Reverse Screw |

**Claims**

1. A method for producing a solid electrolyte, comprising reacting two or more kinds of solid raw materials using a multi-axial kneading machine to give an amorphous solid electrolyte.

2. The method for producing a solid electrolyte according to claim 1, wherein the temperature at the reaction is not higher than the crystallization temperature of the amorphous solid electrolyte.

3. The method for producing a solid electrolyte according to claim 1 or 2, wherein the reaction is carried out while cooling.

4. The method for producing a solid electrolyte according to any one of claims 1 to 3, wherein the reaction is carried out in a solid state.

5. The method for producing a solid electrolyte according to any one of claims 1 to 4, wherein the solid raw materials contain a lithium element, a phosphorus element and a sulfur element.

6. The method for producing a solid electrolyte according to claim 5, wherein the solid raw materials contain at least one of a lithium compound and a lithium metal elementary substance, and at least one of a phosphorus compound and a phosphorus elementary substance.

7. The method for producing a solid electrolyte according to claim 5 or 6, wherein the solid raw materials contain lithium sulfide and phosphorus sulfide.

8. The method for producing a solid electrolyte according to any one of claims 5 to 7, wherein the solid raw materials further contain a halogen element.

9. The method for producing a solid electrolyte according to claim 8, wherein the halogen element is at least one of bromine and iodine.

10. The method for producing a solid electrolyte according to claim 8 or 9, wherein the solid raw materials contain at least one of lithium bromide and lithium iodide.

11. A method for producing a crystalline solid electrolyte, comprising producing a solid electrolyte according to the solid electrolyte production method of any one of claims 1 to 10 followed by heating the solid electrolyte.

12. A method for producing an inorganic material, comprising reacting two or more kinds of solid raw materials using a multi-axial kneading machine to give an amorphous inorganic material.

13. A multi-axial kneading machine for use in production of an amorphous solid electrolyte, the production comprising reacting two or more kinds of solid raw materials.

[Fig. 1]

[Fig. 2]

[Fig. 3]

[Fig. 4]

[Fig. 5]

[Fig. 6]

**EP 3 312 846 A1**

<table>
<tr><td colspan="2" style="text-align:center"><strong>INTERNATIONAL SEARCH REPORT</strong></td><td colspan="2">International application No.<br>PCT/JP2016/068009</td></tr>
</table>

**A. CLASSIFICATION OF SUBJECT MATTER**

*H01B13/00*(2006.01)i, *C01B25/14*(2006.01)i, *H01M6/18*(2006.01)i, *H01M10/0562*(2010.01)i

According to International Patent Classification (IPC) or to both national classification and IPC

**B. FIELDS SEARCHED**

Minimum documentation searched (classification system followed by classification symbols)
H01B13/00, C01B25/14, H01M6/18, H01M10/0562

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | JP 2012-048884 A (Toyota Motor Corp.),<br>08 March 2012 (08.03.2012),<br>paragraphs [0004], [0018], [0020], [0022] to [0024], [0028]<br>(Family: none) | 1-13 |
| Y | JP 2007-220377 A (Ohara Inc.),<br>30 August 2007 (30.08.2007),<br>paragraph [0027]<br>(Family: none) | 1-13 |

☐ Further documents are listed in the continuation of Box C. ☐ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>28 June 2016 (28.06.16) | Date of mailing of the international search report<br>05 July 2016 (05.07.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11134937 A
- JP 2009110920 A
- WO 2009047977 A1
- JP 2012096973 A
- JP 7330312 A
- JP 9283156 A
- JP 2010163356 A
- JP 2011084438 A

**Non-patent literature cited in the description**

- **KANNO et al.** *Journal of The Electrochemical Society,* 2001, vol. 148 (7), A742-746
- *Solid State Ionics,* 2006, vol. 177, 2721-2725